# EUROPÄISCHE PATENTSCHRIFT

(11) **EP 2 400 065 B1**
(45) Veröffentlichungstag und Bekanntmachung des Hinweises auf die Patenterteilung: **17.04.2013**
(21) Anmeldenummer: 10006552.3
(22) Anmeldetag: 23.06.2010
(51) Int. Cl.: E03B 3/03, E04D 13/08

(54) **Vorrichtung zum Fangen von Regenwasser aus Fallrohr**
Device for capturing rain water from downpipe
Dispositif de collecte d'eau de pluie d'un tuyau de descente

(43) Veröffentlichungstag der Anmeldung: 28.12.2011
(73) Patentinhaber: Otto Graf GmbH Kunststofferzeugnisse, 79331 Teningen (DE)
(72) Erfinder: Graf, Otto P., 79331 Teningen (DE)
(74) Vertreter: Grünecker, Kinkeldey, Stockmair & Schwanhäusser

(56) Entgegenhaltungen:
- EP-B1- 0 625 228
- GB-A- 908 311
- GB-A- 2 248 262
- GB-A- 2 430 015

## Beschreibung

Die Erfindung betrifft eine Vorrichtung der im Oberbegriff des Patentanspruchs 1 angegebenen Art.

Bei der gattungsgemäßen, aus EP 0 625 228 B bekannten Vorrichtung dient der als in Umfangsrichtung unterbrochene Rohrschelle ausgebildete Abstützkörper gleichzeitig als Verbindung herstellende Halteeinrichtung der Vorrichtung am Fallrohr. Das Abzweigrohr wird in die Öffnung im Fallrohr mit der Fangschaufel voran eingesteckt. Der rohrschellenförmige Abstützkörper wird auf den Umfang des Fallrohres gespannt, um die Vorrichtung am Fallrohr zu positionieren. Der Abstützkörper ist mit unrundem Querschnitt ausgebildet, so dass am Einsteckrohr vorgesehene Vorsprünge eine Drehsicherung erbringen. Zur zusätzlichen Positionierung und Abdichtung ist am Abstützkörper ein Rohrstutzen angeformt, in welchen das Abzweigrohr eingeführt wird. Die Montage der Vorrichtung am Fallrohr ist kompliziert. Die Haltewirkung der offenen Rohrschelle ist unbefriedigend. Die Vorrichtung passt im Wesentlichen nur für eine bestimmte Fallrohrdimension.

Eine aus GB 2 248 262 A bekannte Vorrichtung wird direkt in der Montier- und Abzweigöffnung des Fallrohres durch kraftschlüssiges Einstecken ohne Zuhilfenahme eines Abstützkörpers festgelegt, bis die Wasserfangschaufel an einem Kontaktpunkt an der Innenwand des Fallrohres ansteht und Rastnasen an der Wurzel der Wasserfangschaufel den Rand der Montier- und Abzweigöffnung hintergreifen.

Aus GB 908 311 A ist es bekannt, beispielsweise an einem Fallrohr eine Abzweigung so zu montieren, dass Wasser aus dem Fallrohr nach außen abgeleitet werden kann. Dabei wird ein innenseitiger Rohrstutzen in das Fallrohr eingeführt und durch die Montieröffnung nach außen gesteckt. Die Abzweigung leitet Wasser ohne Wasserfangschaufel ab und ist fest montiert.

Der Erfindung liegt die Aufgabe zugrunde, eine bequem montierbare, zuverlässig positionierbare und abdichtbare und gegebenenfalls universell für unterschiedliche Fallrohrdimensionen verwendbare Vorrichtung zum Fangen von Regenwasser zu schaffen.

Die gestellte Aufgabe wird mit den Merkmalen im Patentanspruch 1 gelöst.

Da die Halteeinrichtung mit dem zumindest einen hinterschnittenen Rasthaken im Wesentlichen nur mit der Montier- und Abzweigöffnung des Fallrohres zusammenwirkt und die Vorrichtung über das Spannsystem sehr sicher festlegen lässt, kann ein und dieselbe Vorrichtung bei unterschiedlichen Fallrohrdimensionen universell verwendet werden. Die Anbringung der Vorrichtung ist bequem und von ungeübten Personen durchführbar. Über den zumindest einen Rasthaken und das Spannsystem lässt sich ein starker Kraftschluss erzeugen, der für eine sichere Positionierung der Vorrichtung am Fallrohr sorgt, und auch eine zuverlässige Abdichtung erzeugen lässt. Die Vorrichtung lässt sich auch an Fallrohren anbringen, die in Gebäudenischen versenkt untergebracht sind, da nur im Öffnungsbereich manipuliert zu werden braucht. Dabei ist der jeweilige Rasthaken an einem Einsteckende einer das Abzweigrohr aufnehmenden Hülse vorgesehen. Die stabil am Fallrohr verankerbare Hülse stützt das Einsteckrohr einwandfrei ab, so dass die Fangschaufel auch unter größeren Strömungskräften einwandfrei im Fallrohr positioniert bleibt. Zweckmäßig weist das Spannsystem eine am Abstützkörper ansetzbare Überwurfmutter auf, die über eine Bajonett- oder Schraubverbindung an der Hülse angreift. Durch Verdrehen der Überwurfmutter wird über die Bajonett- oder Schraubverbindung die Hülse gegenüber dem Abstützkörper so verspannt, dass die Rasthaken einen festen Formschluss mit dem Fallrohr eingehen. Alternativ weist hingegen das Spannsystem eine an der Hülse den Abstützkörper abgewandte abgestützte, vorzugsweise vorgespannte, Spannfederanordnung und ein auf der Hülse verstellbares, am Abstützkörper ansetzbares Federwiderlager auf. Das Spannsystem entfaltet seine Verriegelungswirkung dank der Spannfederanordnung selbsttätig, sobald die Rasthaken durch die Montage- und Abzweigöffnung des Fallrohres eingeführt worden sind und die Innenwand des Fallrohres hintergreifen.

Jeder Rasthaken weist, vorzugsweise, eine vorneliegende Einführrampe auf, so dass sich jeder Rasthaken allein durch Durchschieben durch die Montage- und Abzweigöffnung des Fallrohres einbringen lässt und unter der Elastizität mit seiner Hinterschneidung die Innenwand des Fallrohres hintergreift.

Bei einer zweckmäßigen Ausführungsform des Erfindungsgegenstandes sind in Umfangsrichtung der Öffnung des Fallrohres mindestens zwei hinterschnittene und federelastische Rasthaken vorgesehen. Die mindestens zwei Rasthaken definieren, vorzugsweise, in unverformtem Zustand eine Außenweite größer als die lichte Weite der Montier- und Abzweigöffnung des Fallrohres, um, sobald durch die Öffnung eingeführt, einen stabilen Formschluss mit dem Fallrohr zu erzeugen, der durch das Spannsystem gesichert ist.

Bei einer bevorzugten Ausführungsform ist eine von der Montage- und Abzweigöffnung des Fallrohres unabhängige formschlüssige Verdrehsicherung zumindest für das Abzweigrohr vorgesehen. Die Verdrehsicherung stellt die ordnungsgemäße Positionierung der Fangschaufel im Fallrohr sicher, wobei die Montage- und Abzweigöffnung eine einfache ausgeschnittene Rundbohrung sein kann. Die Verdrehsicherung ist, vorzugsweise, in das Spannsystem eingegliedert und in ihrer Sicherungswirkung somit vom Hersteller der Vorrichtung vorbestimmt, so dass der Monteur nur eine einfache Öffnung zu schneiden und auf die Verdrehsicherung kein Augenmerk zu richten braucht.

Bei einer weiteren zweckmäßigen Ausführungsform ist in das Abzweigrohr ein Filter- und/oder Dosiervorrichtung eingegliedert, vorzugsweise mit einem Filter- und/oder Dosiertopf mit einem abnehmbaren Deckel und, gegebenenfalls, einem Grobfiltereinsatz. Auf diese Weise lässt sich wahlweise eine Filter- oder Dosierfunktion nutzen, oder können beide Funktionen nach Bedarf benutzt werden. Die Dosierfunktion ermöglicht zweckmäßig die Einstellung der Regenwasserentnahme.

Hierbei kann es zweckmäßig sein, wenn die Filter- und/oder Dosiervorrichtung manuell zwischen einer ungedrosselten Durchlaufstellung und einer Absperrstellung bewegbar ist, und vorzugsweise eine mit dem Deckel verdrehbare Dosierschürze aufweist. Der Deckel erhält hierbei eine Doppelfunktion, weil er einerseits, falls vorhanden, die Reinigung oder den Austausch des Filtereinsatzes ermöglicht, andererseits für die Einstellung der Wasserentnahme benutzbar ist.

Die durch rückstellendes Verformen durch die Hülse und die Montage- und Einstecköffnung einbringbare Fangschaufel ist zweckmäßig ein sichelförmiger Schalenkörper, der im Fallrohr nur einen vorbestimmten Querschnitt beansprucht und das Ablaufen größerer Verunreinigungen, wie Laub oder dgl., durch das Fallrohr begünstigt. Andererseits kann der Schalenkörper Regenwasser mit günstigen Strömungsverhältnissen fangen und in das Abzweigrohr einleiten. Ein Typ einer Fangschaufel passt in unterschiedliche Fallrohre.

Bei einer zweckmäßigen Ausführungsform ist jeder Rasthaken an einer Zunge angeordnet, die beidseitig durch Längsschlitze im Einsteckende der Hülse begrenzt ist. Die Zunge erleichtert die Nachgiebigkeit des Rasthakens beim Durchführen durch die Montage- und Abzweigöffnung und erzeugt auch die erforderliche Rückstellkraft zum Herstellen des Formschlusses des Rasthakens. Der Rasthaken kann, da die Zunge federelastisch ist, sehr formstabil ausgebildet werden, ohne die Bequemlichkeit bei der Montage der Vorrichtung zu beeinträchtigen.

Bei einer zweckmäßigen Ausführungsform kann der Abstützkörper eine konkave Anlagefläche mit im Wesentlichen der Fallrohraußenkrümmung aufweisen, und an der der Anlagefläche abgewandten Seite zur Aufnahme der Hülse einen eine Durchgangsöffnung des Abstützkörpers verlängernden Rohrstutzen. Hierbei kann es zweckmäßig sein, wenn am Innenumfang des Rohrstutzens und/oder der Durchgangsöffnung des Abstützkörpers wenigstens ein in einer vorbestimmten Relativposition zur Anlagenflächenkrümmung platzierter und in einen Längsschlitz am Einsteckende der Hülse zum Drehsicherungseingriff bringbarer Vorsprung vorgesehen ist, vorzugsweise eine Längsrippe, die entweder direkt in einen Längsschlitz des Einsteckendes oder zwischen zwei benachbarten Rasthaken einschiebbar ist und zur Drehsicherung einen in Umfangsrichtung wirkenden Eingriff herstellt. Auf diese Weise lässt sich die Hülse mit den Rasthaken in einer vorbestimmten Drehposition montieren.

Damit auch das Abzweigrohr und damit die Fangschaufel drehgesichert werden, ist es zweckmäßig, wenn an der Hülse und dem Abzweigrohr in einen gegenseitigen Drehsicherungseingriff bringbare Kupplungselemente vorgesehen sind. Bei der Drehsicherungsfunktion wird der Form- und Kraftschluss benutzt, den die Rasthaken über das Spannsystem mit dem Fallrohr eingehen. Sofern der Abstützkörper eine konkav gekrümmte Anlagefläche besitzt, erzeugt die Anlagefläche in montiertem Zustand der Vorrichtung einen weiteren Formschluss mit dem Fallrohr, jedoch nur in einem relativ begrenzten Bereich der Außenseite des Fallrohres. Dieser weitere Formschluss lässt sich gewinnbringend ebenfalls zur einwandfreien Drehsicherung nutzen. Alternativ oder additiv zu einer konkav gekrümmten Anlagefläche kann eine relativ starke Dichtung am gegebenenfalls ebene Platte ausgebildeten Abstützkörper vorgesehen sein, die um die Montage- und Abzweigöffnung abdichtet und unterschiedliche Außenkrümmungen des Fallrohres bei unterschiedlichen Fallrohrdimensionen kompensiert, so dass die Vorrichtung universell für unterschiedliche Fallrohrdimensionen verwendbar ist und sogar für Vierkant-Fallrohre.

Bei einer zweckmäßigen Ausführungsform erstreckt sich jeder Rasthaken in Umfangsrichtung über etwa 12 % des Umfangs der Hülse. Auf diese Weise werden große Kraftübertragungsflächen geschaffen. Besonders zweckmäßig sind an der Hülse zwei diametral gegenüberliegende Rasthakenpaare vorgesehen, die insgesamt etwa den halben Umfang der Hülse belegen. Zweckmäßig wird die Vorrichtung so montiert, dass ein Rasthakenpaar oben und das andere unten liegt, so dass die Vorrichtung in Richtung der Erdanziehungskraft sehr stabil abgestützt ist.

Um die Vorrichtung bequem montieren oder demontieren zu können, kann es zweckmäßig sein, wenn jede Schalenhälfte der sichelförmigen Fangschaufel über eine Biegekerbstruktur mit dem Abzweigrohr verbunden ist. Die Biegekerbstruktur erlaubt das bequeme Verformen der Schalenhälften beim Einführen und Herausziehen ohne Bruchgefahr für die Fangschaufel. Das Abzweigrohr kann einstückig durchgehend, beispielsweise bis zu einem Ablaufanschluss ausgebildet sein, oder, zweckmäßig, aus teleskopartig ineinandergesteckten Rohrabschnitten zusammengesetzt sein, von denen einer die Fangschaufel und der andere den Filter- und/oder Dosiertopf aufweist.

Ausführungsformen des Erfindungsgegenstandes werden anhand der Zeichnungen erläutert. Es zeigen:
- Fig. 1: eine Perspektivansicht einer an einem Fallrohr montierten Vorrichtung zum Fangen von Regenwasser,
- Fig. 2: eine Schnittdarstellung zu Fig. 1,
- Fig. 3: eine perspektivische Explosionsdarstellung zur Verdeutlichung der Einzelteile der Vorrichtung, und
- Fig. 4: einen Teilschnitt einer Detailvariante der am Fallrohr montierten Vorrichtung.

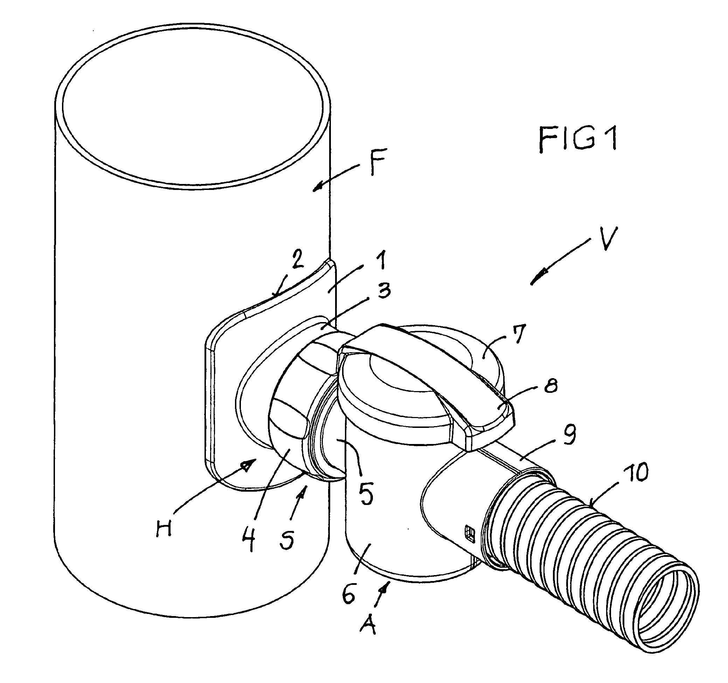

Fig. 1 zeigt ein Fallrohr F, z.B. ein Regenwasserfallrohr an einem Gebäude, an welchem eine Vorrichtung V zum Fangen und Abzweigen von Regenwasser aus dem Fallrohr F montiert ist. Die Vorrichtung V, deren Komponenten zweckmäßig aus Kunststoff hergestellt sind, weist einen plattenförmigen Abstützkörper 1 mit einer in der gezeigten Ausführungsform konkav gerundeten (teilzylindrischen) Anlagefläche 2 auf, wobei am Abstützkörper 1 ein nach außen weisender Rohrstutzen angeformt ist. Zur Vorrichtung V gehört eine Halteeinrichtung H mit einem Spannsystem S zum Montieren und Festlegen der Vorrichtung V am Fallrohr F. In der in Fig. 1 gezeigten Ausführungsform weist das Spannsystem S eine Überwurfmutter 4 auf, aus der sich ein Abzweigrohr 5 herauserstreckt. Im Verlaufe des Abzweigrohres 5 ist, vorzugsweise, eine Filter- und/oder Dosiervorrichtung A angeordnet (optional), von der sich ein Ablaufstutzen 9, gegebenenfalls mit einem Gefälle, wegerstreckt, in welchem ein Ablaufschlauch 10 angeordnet ist. Von der Filter- und/oder Dosiervorrichtung A sind in Fig. 1 ein Filter- und/oder Dosiertopf 6, eingegliedert beispielsweise in das Abzweigrohr 5, ein abnehmbarer und/oder zumindest verdrehbarer Deckel 7 und eine Handhabe 8 am Deckel 7 erkennbar. Der Abstützkörper 1 könnte auch eine ebene Platte oder ein Ringflansch sein.

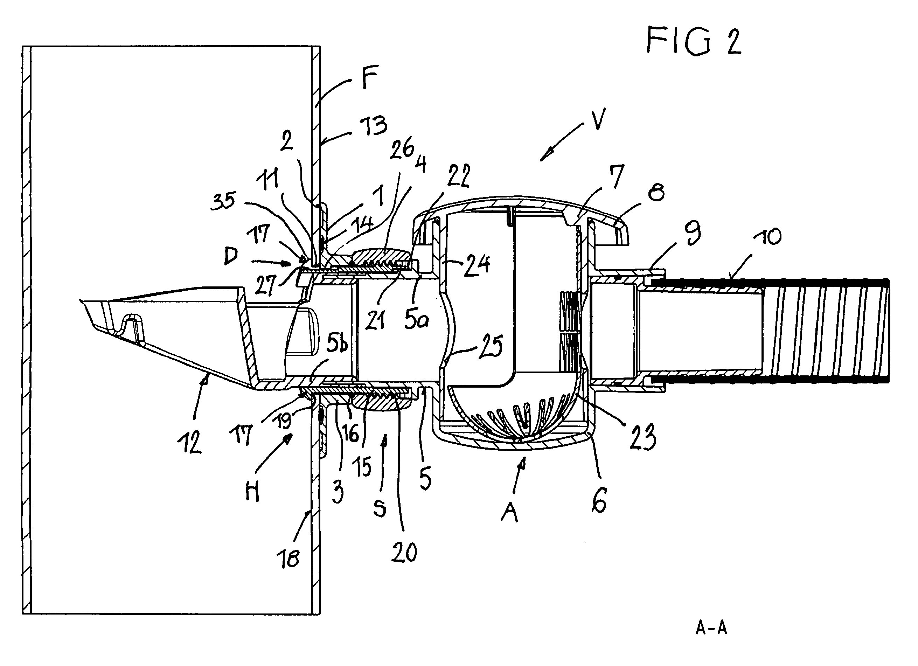

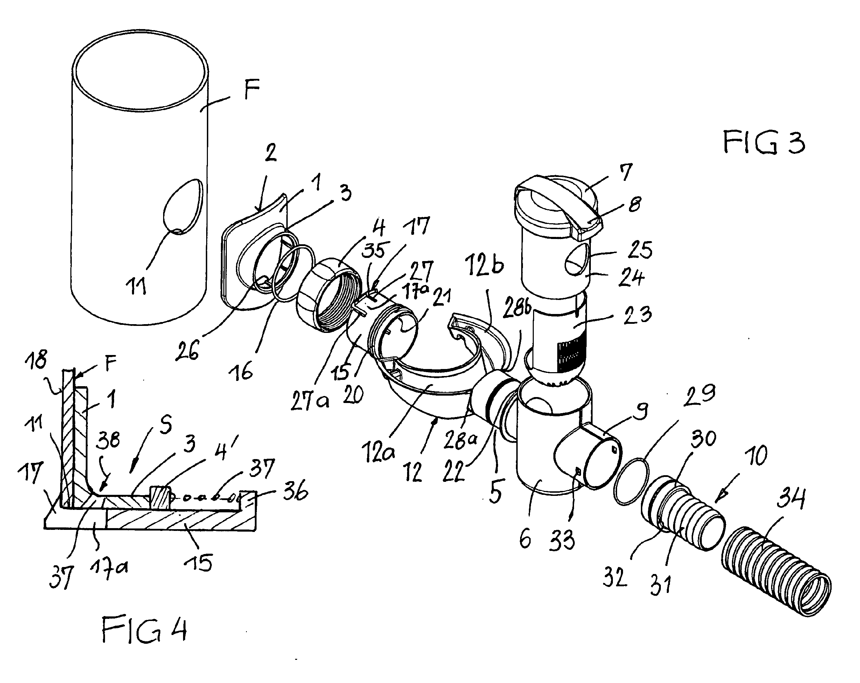

Fig. 2 verdeutlicht unter Bezugnahme auf Fig. 3 die einzelnen Komponenten und die Montageweise der Vorrichtung V am Fallrohr F.

In das Fallrohr F ist eine beispielsweise runde Montage- und Abzweigöffnung 11 eingebracht, beispielsweise mit einem Zirkelschneider eingeschnitten, durch welche das Abzweigrohr 5 mit einer Fangschaufel 12 voran in das Fallrohr F ragt. Die Fangschaufel 12 ist elastisch verformbar und derart ausgebildet, dass sie sich manuell so weit verformen lässt, bis sie durch zumindest die Öffnung 11 eingeführt werden kann, und sich dann selbsttätig in die Arbeitsposition zum Fangen von Regenwasser rückstellt. Der Abstützkörper 1 liegt mit seiner konkav gekrümmten Anlagefläche 2 (falls vorhanden, gegebenenfalls passend zur Au-βenkrümmung einer Außenfläche 13 des Fallrohres F) an der Außenfläche 13 an und dichtet über eine Dichtung 14 den Bereich um die Öffnung 11 ab. Das Einsteckrohr 5 ist in einer Hülse 15 aufgenommen, die an ihrem Einsteckende zumindest einen hinterschnittenen Rasthaken 17 aufweist. Zweckmäßig sind in Umfangrichtung mehrere Rasthaken 17 vorgesehen, deren jeder eine begrenzte Umfangserstreckung besitzt. Am vorneligenden Ende jedes Rasthakens 17 ist zweckmäßig eine schräge oder gerundete Einführrampe 35 angeformt. In der gezeigten Montierlage hintergreift jeder Rasthaken 17 mit seiner Hinterschneidung eine Innenwand 18 des Fallrohres F im Bereich um die Öffnung 11. Die Hülse 15 ist, zweckmäßig, an der Außenseite durch eine zwischen der Überwurfmutter 4 und dem Rohransatz 3 eingeordnete Dichtung 16 abgedichtet. Die Überwurfmutter 4 besitzt ein Innengewinde, das mit einem Außengewindeabschnitt 20 der Hülse 15 verschraubt ist und die Rasthaken 17 gegen die Innenwand 18 spannt, während gleichzeitig die Überwurfmutter 4 am Rohransatz 3 des Abstützkörpers 1 abgestützt ist. Anstelle einer Gewindeverbindung könnte zwischen der Überwurfmutter 4 und der Hülse 15 auch eine Bajonettverbindung vorgesehen sein, die über nur eine Teildrehung der Überwurfmutter 4 anziehbar bzw. lösbar ist.

An der Hülse 15 und am Einsteckrohr 5 sind in ein in gegenseitigen Drehsicherungseingriff bringbare Kupplungselemente 21, 22 vorgesehen, die die Drehsicherung des Abzweigrohres 5 gegenüber der Hülse 15 erbringen. Die Hülse 15 wird ferner durch eine in die Halteeinrichtung H eingegliederte Drehsicherung D relativ zum Abstützkörper 1 bzw. dem Fallrohr F festgelegt. Die Drehsicherung D wird später anhand Fig. 3 im Detail erläutert.

Das Abzweigrohr 5 ist in der gezeigten Ausführungsform in Fig. 2 aus zwei teleskopartig ineinandergesteckten Rohrabschnitten 5a, 5b hergestellt, von denen der Rohrabschnitt 5b die Fangschaufel 12 und der Rohrabschnitt 5a den Filter- und/oder Dosiertopf 6 aufweist, und auch den Ablaufrohrstutzen 9. Das Abzweigrohr 5 könnte auch einstückig sein.

Die Filter- und/oder Dosiervorrichtung A besteht aus dem Topf 6, dem Deckel 7 und einem optional in den Topf 6 eingesetzten Grobfiltereinsatz 23 und/oder einer am Deckel 7 angeformten Dosierschürze 24 mit Dosierdurchgängen 25. Die Dosierdurchgänge 25 lassen sich mittels des Deckels 7 (Drehhandhabe 8) relativ zum Abzweigrohr 5 so verdrehen, dass entweder eine volle Durchgangsstellung, oder eine beliebig drosselnde Zwischenstellung oder eine vollständige Absperrstellung gegeben ist, in der im Wesentlichen kein Regenwasser aus dem Fallrohr F entnommen wird.

Die in Fig. 2 in Montierposition gezeigten Rasthaken 17 und die Drehsicherung D sind deutlicher aus Fig. 3 entnehmbar. Jeder Rasthaken 17 ist in Fig. 3 an einem Einsteckende der Hülse 15 einstückig angeformt, und zwar an einer Zunge 17a des Einsteckendes, die durch zwei Längsschlitze 27, 27a begrenzt wird und federelastisch ist. An der Innenwand einer Durchgangsöffnung im Abstützkörper 1 und/oder des Rohransatzes 3 ist mindestens eine Längsrippe 26 vorstehend angeformt, die in einen der Längsschlitze 27 oder 27a einschiebbar ist, um die montierte Hülse 15 gegenüber dem Abstützkörper 1 gegen Verdrehen abzustützen. Der Abstützkörper 1 wird, falls eine ebene Platte, entweder über den Kraftschluss an der Außenoberfläche des Fallrohres F fixiert und/oder über die Teilzylinderfläche der konkav gekrümmten Anlagefläche 2. Jede Längsrippe 26 kann in einer relativen Drehposition abgestimmt auf beispielsweise die Anlagefläche 2 positioniert sein. Von den Längsrippen 26 (es können in Umfangrichtung mehrere vorgesehen sein) greift eine entweder in einen Längsschlitz 27a neben einem Rasthaken 17 oder in einen Längsschlitz 27 zwischen zwei benachbarten Rasthaken 17 ein.

Jeder Rasthaken 17 kann in Umfangsrichtung beispielsweise etwa 12 % des Umfangs der Hülse 15 belegen. Bei der gezeigten Ausführungsform sind zwei Rasthakenpaare diametral gegenüberliegend am Einsteckende der Hülse 15 angeformt, die insgesamt etwa den halben Umfang der Hülse 15 belegen. Zwischen den Rohrabschnitten 5a, 5b des Abzweigrohres 5 und/oder zwischen dem Abzweigrohr 5 und der Hülse 15 kann ebenfalls jeweils eine Abdichtung (nicht gezeigt) vorgesehen sein.

Die Fangschaufel 12 (Fig. 3) ist sichelförmig mit zwei Schalenhälften 12a, 12b ausgebildet, deren jede über eine Biegekerbzone 28a, 28b mit dem Ende des Einsteckrohres 5 verbunden ist, so dass die beiden Schalenhälften 12a, 12b bequem so weit zueinander biegbar sind, dass sie durch die Hülse 15 und die Öffnung 11 einführbar sind, und dann selbsttätig in die in Fig. 3 gezeigte Arbeitsposition zurückspringen. Jede Schalenhälfte 12a, 12b kann mit einem Gefälle zum Abzweigrohr 5 geformt sein und erstreckt sich in Höhenrichtung über einen erheblichen unteren Teil des Umfangs des Einsteckrohres 5, so dass gefangenes Regenwasser gleichförmig abgeleitet wird.

Der Ablaufschlauch 10 besteht beispielsweise aus einer Schlauchtülle 31 mit einem Dichtbund 30 und Verriegelungselementen 32, die mit Verriegelungsöffnungen 33 im Ablaufrohrstutzen 9 zusammenwirken, wobei in diesem Bereich eine Dichtung 29 eingesetzt sein kann. Auf die, zweckmäßig verrippte, Schlauchtülle 31 ist ein Wendelschlauch 34 aufgebracht, wie in Fig. 2 zu sehen ist.

Fig. 4 verdeutlicht eine Detailvariante des Spannsystems S zum Montieren der Vorrichtung V. In diesem Spannsystem S ist zwischen einer Abstützung 36 der Hülse 15 und einem ringförmigen Federwiderlager 4' eine Spannfederanordnung 37 vorgesehen, vorzugsweise in vorgespanntem Zustand. Das Federwiderlager 4' ist an den Rohransatz 3 anlegbar, so dass die Spannfederanordnung 37 die durch die Öffnung 11 durchgeführten, und nach außen rückgestellten Widerhaken 17 gegen die Innenwand 18 des Fallrohres F spannt. Nach dem Einführen der zusammengedrückten Fangschaufel 12 und der Rasthaken 17 durch die Öffnung 11 wird die Vorrichtung S selbsttätig mittels der Spannfederanordnung 37 festgelegt. Zur Demontage der Vorrichtung V kann am Abstützkörper 1 wenigstens ein Durchgang 37 vorgesehen sein, durch den mittels eines nicht gezeigten Werkzeugs in Richtung eines Pfeiles 38 eine Kraft auf die Zunge 17a des Rasthakens 17 ausübbar ist, um diesen aus seinem Eingriff zu lösen und herausziehen zu können. Bei einer weiteren, nicht gezeigten Detailvariante, könnte die Anlagefläche 2 im Wesentlichen eben sein und eine Dichtung 14 (oder mehrere solcher Dichtungen 14 in konzentrischer Anordnung) aufweisen, um unter dem Kraftschluss des Spannsystems S an unterschiedlich dimensionierten Fallrohren dennoch einwandfrei abzudichten und positioniert zu sein. Auf diese Weise kann ein und dieselbe Vorrichtung V bei unterschiedlichen Fallrohrdimensionen und auch Vierkant-Fallrohren gleichermaßen verwendet werden. Die Rasthaken 17 sind zweckmäßig der Krümmung der Innenwand 18 des Fallrohres F entsprechend ausgebildet, damit sie über einen möglichst großen Umfangsbereich der Öffnung tragen. Bei einer weiteren Alternative könnte die Hülse 15 mit einer endseitigen Dichtung direkt an das Fallrohr F angesetzt sein, wobei der Stützkörper 1 wegfallen könnte, oder es wird an dessen Stelle nur der Rohrstutzen 3 als Ansetzring vorgesehen.

## Patentansprüche

1. Vorrichtung (V) zum Fangen von Regenwasser aus einem eine Montier- und Abzweigöffnung (11) aufweisenden Fallrohr (F), wobei die Vorrichtung ein Abzweigrohr (5) mit einer endseitigen Wasserfangschaufel (12), einen vom Abzweigrohr (5) durchsetzten Abstützkörper (1) und eine Halteeinrichtung (H) umfasst, und mittels der Halteeinrichtung (H) am Fallrohr (F) so festgelegt ist, dass das Abzweigrohr (5) in die Montier- und Abzweigöffnung (11) eingreift und der Abstützkörper (1) das Fallrohr (F) im Bereich um die Montier- und Abzweigöffnung (11) abdeckt, durch gekennzeichnet, dass die Halteeinrichtung (H) an einem Einsteckende einer das Abzweigrohr (5) aufnehmenden Hülse (15) wenigstens einen durch die Montier- und Abzweigöffnung (11) durchführbaren, hinterschnittenen Rasthaken (17) aufweist, dass zwischen dem Abstützkörper (1) und dem Rasthaken (17) ein Rasthaken-Spannsystem (S) zwischengeschaltet ist, und dass das Spannsystem (S) entweder eine am Abstützkörper (1) ansetzbare Überwurfmutter (4) aufweist, die über eine Bajonett- oder Schraubverbindung an der Hülse (15) angreift, oder eine an der Hülse (15) dem Stützkörper (1) abgewandt abgestützte Spannfederanordnung (37) und ein auf der Hülse (15) verschiebbares, am Abstützkörper (1) ansetzbares Federwiderlager (4') aufweist.

2. Vorrichtung nach Anspruch 1, **dadurch gekennzeichnet, dass** in der Halteeinrichtung (H) in Umfangsrichtung mindestens zwei hinterschnittene, federelastische Rasthaken (17) vorgesehen sind, die, vorzugsweise, in unverformtem Zustand eine Außenweite größer als die lichte Weite der Montier- und Abzweigöffnung (11) definieren.

3. Vorrichtung nach Anspruch 1, **dadurch gekennzeichnet, dass** der jeweilige Rasthaken (17) eine vorneliegende Einführrampe (35) aufweist.

4. Vorrichtung nach Anspruch 1, **dadurch gekennzeichnet, dass**, vorzugsweise im Spannsystem (S), eine formschlüssige Verdrehsicherung (D) zumindest für das Abzweigrohr (5) vorgesehen ist.

5. Vorrichtung nach wenigstens einem der vorhergehenden Ansprüche, **dadurch gekennzeichnet, dass** in das Abzweigrohr (5) eine Filter- und/oder Dosiervorrichtung (A) eingegliedert ist, vorzugsweise ein Filter- und/oder Dosiertopf (6) mit einem abnehmbaren Deckel (7) und einem Grobfiltereinsatz (23).

6. Vorrichtung nach Anspruch 5, **dadurch gekennzeichnet, dass** die Dosiervorrichtung (A) manuell und von außen zwischen einer ungedrosselten Durchlaufstellung und einer Absperrstellung verschiebbar ist, und, vorzugsweise, eine mit dem Deckel (7) verdrehbare Dosierschürze (24) aufweist.

7. Vorrichtung nach Anspruch 1, **dadurch gekennzeichnet, dass** die Fangschaufel (12) ein sichelförmiger Schalenkörper mit zwei vertieften Schalenhälften (12a, 12b) ist.

8. Vorrichtung nach Anspruch 1, **dadurch gekennzeichnet, dass** jeder Rasthaken (17) an einer Zunge angeordnet ist, die im Einsteckende der Hülse (15) beidseitig durch Längsschlitze (27, 27a) begrenzt ist.

9. Vorrichtung nach wenigstens einem der vorhergehenden Ansprüche, **dadurch gekennzeichnet, dass** der Abstützkörper (1) eine konkave oder ebene Anlagefläche (2) mit im Wesentlichen der Fallrohr-Außenkrümmung und an der der Anlagefläche (2) abgewandten Seite zur Aufnahme der Hülse (15) einen eine Durchgangsöffnung des Abstützkörpers (1) verlängernden Rohrstutzen (3) aufweist, und dass am Innenumfang des Rohrstutzens (3) und/oder der Durchgangsöffnung des Abstützkörpers (1) wenigstens ein in einer vorbestimmten Relativposition zur Anlagefläche angeordnete, in einen Längsschlitz (27, 27a) zum Drehsicherungseingriff bringbarer Vorsprung (26), vorzugsweise eine Längsrippe, vorgesehen ist.

10. Vorrichtung nach Anspruch 1, **dadurch gekennzeichnet, dass** an der Hülse (15) und dem Abzweigrohr (5) über das Spannsystem (S) in einen gegenseitigen Drehsicherungseingriff bringbare Kupplungselemente (21, 22) vorgesehen sind.

11. Vorrichtung nach wenigstens einem der vorhergehenden Ansprüche, **dadurch gekennzeichnet, dass** sich jeder Rasthaken (17) in Umfangsrichtung über etwa 12 % des Umfangs der Hülse (15) erstreckt, und, vorzugsweise, einen gekrümmten Verlauf besitzt.

12. Vorrichtung nach wenigstens einem der vorhergehenden Ansprüche, **dadurch gekennzeichnet, dass** an der Hülse (15) zwei diametral gegenüberliegende Rasthakenpaare vorgesehen sind, die insgesamt etwa den halben Umfang der Hülse (15) belegen.

13. Vorrichtung nach Anspruch 7, **dadurch gekennzeichnet, dass** jede Hälfte (12a, 12b) der sichelförmigen Fangschaufel (12) über eine Biegekerbstruktur (28a, 28b) mit dem Abzweigrohr (5) verbunden ist, und dass, vorzugsweise, das Abzweigrohr (5) aus teleskopartig ineinandergesteckten Rohrabschnitten (5a, 5b) gefügt ist, von denen einer die Fangschaufel (12) und der andere den Filter und/oder Dosiertopf (6) aufweist.

## Claims

1. Device (V) for catching rainwater from a downpipe (F) comprising a mounting and branching opening (11), wherein the device comprises a branch pipe (5) with a water-catching blade (12) at the end, a support member (1) traversed by the branch (5), and a retaining means (H), and which is fixed at the downpipe (F) by means of the retaining means (H) such that the branch pipe (5) engages into the mounting and branching opening (11) and the support member (1) covers the downpipe (F) in the area around the mounting and branching opening (11), **characterized in that** the retaining means (H) comprises at least one undercut engagement hook (17) disposed at a plug-in end of a sleeve (15) accommodating the branch pipe (5), said engagement hook (17) being adapted for being passed through the mounting and branching opening (11), that an engagement hook tensioning system (S) is interconnected between the support member (1) and the engagement hook (17), and that the tensioning system (S) comprises either a spigot nut (4) capable of being set onto the support member (1) and engaging the sleeve (15) via a bayonet or screw connection, or a tension spring arrangement (37) supported at the sleeve (15) remote from the support member (1) and a spring abutment (4') that is displaceable on the sleeve (15) and can be set against the support member (1).

2. Device as claimed in claim 1, **characterized in that** at least two undercut, spring-elastic engagement hooks (17) are provided in the retaining means (H) in the circumferential direction, which, preferably in not deformed state, define an exterior width that is larger than the inner width of the mounting and branching opening (11).

3. Device as claimed in claim 1, **characterized in that** the respective engagement hook (17) has a front insertion ramp (35).

4. Device as claimed in claim 1, **characterized in that**, preferably in the tensioning system (S), a form-fit anti-rotation device (D) at least for the branch pipe (5) is provided.

5. Device as claimed in at least one of the preceding claims, **characterized in that** a filter and metering device (A) is incorporated in the branch pipe (5), preferably a filter and/or metering pot (6) with a removable lid (7) and a coarse filter insert (23).

6. Device as claimed in claim 5, **characterized in that** the metering device (A) is adjustable manually and from the outside between a fully open through flow position and a locking position, and, preferably comprises a metering skirt (24) rotatable by means of the lid (7).

7. Device as claimed in claim 1, **characterized in that** the catching blade (12) is a sickle-shaped shell body comprising two recessed shall halves (12a, 12b).

8. Device as claimed in claim 1, **characterized in that** each engagement hook (17) is arranged at a tongue, which is bound in the plug-in end of the sleeve (15) on both sides by longitudinal slots (27, 27a).

9. Device as claimed in at least one of the preceding claims, **characterized in that** the support member (1) comprises a concave or planar abutment surface (2) having substantially the outer curvature of the downpipe, and at the side opposing the abutment surface (2) further comprising a pipe socket (3) prolonging a through opening of the support member (1) for receiving the sleeve (15), and that at the inner circumference of the pipe socket (3) and/or the through opening of the support member (1) at least one projection (26), preferably a longitudinal rib, which is arranged in a predetermined position relative to the abutment surface and can be engaged into a longitudinal slot (27, 27a) for anti-rotation engagement, is provided.

10. Device as claimed in claim 1, **characterized in that** coupling elements (21, 22) are provided at the sleeve (15) and the branch pipe (5) that can be brought to mutual anti-rotation engagement by means of the tensioning system (S).

11. Device as claimed in at least one of the preceding claims, **characterized in that** each engagement hook (17) extends in the circumferential direction over approximately 12% of the circumference of the sleeve (15) and preferably has a curved course.

12. Device as claimed in at least one of the preceding claims, **characterized in that** two diametrically opposed engagement hook pairs are provided at the sleeve (15), which on the whole occupy approximately half of the circumference of the sleeve (15).

13. Device as claimed in claim 7, **characterized in that** each half (12a, 12b) of the sickle-shaped catching blade (12) is connected via a bending-notch structure (28a, 28b) with the branch pipe (5) and that, preferably, the branch pipe (5) is composed of pipe sections (5a, 5b) telescopically plugged into each other, wherein one of the pipe sections comprises the catching blade (12) and the other pipe section comprises the filter and/or metering pot (6).

## Revendications

1. Dispositif (V) pour collecter de l'eau de pluie provenant d'un tuyau de descente (F) qui comporte un orifice de montage et de dérivation (11), dans lequel le dispositif comporte un tube de dérivation (5) avec un godet de collecte d'eau distal (12), un corps de support (1) traversé par le tube de dérivation (5) et un dispositif de retenue (H), et fixé à l'aide du dispositif de retenue (H) au tuyau de descente (F) de telle sorte que le tube de dérivation (5) est engagé dans l'orifice de montage et de dérivation (11) et le corps de support (1) recouvre le tuyau de descente (F) dans la zone entourant l'orifice de montage et de dérivation (11), **caractérisé en ce que** le dispositif de retenue (H) comporte à une extrémité d'insertion d'un manchon (15) qui reçoit le tube de dérivation (5) au moins un crochet d'engagement (17) découpé pouvant être passé dans l'orifice de montage et de dérivation (11), **en ce qu'**un système de serrage à crochet d'engagement (S) est intercalé entre le corps de support (1) et le crochet d'engagement (17), et **en ce que** le système de serrage (S) comporte soit un écrou d'accouplement (4) montable sur le corps de support (1) qui s'engage sur le manchon (15) à l'aide d'une connexion à baïonnette ou filetée, soit un agencement à ressort de serrage (37) supporté par le manchon (15) et opposé au corps de support (1) et une butée de ressort (4') coulissant sur le manchon (15) et montable sur le corps de support (1).

2. Dispositif selon la revendication 1, **caractérisé en ce que** sont pourvus dans le dispositif de retenue (H) en direction circonférentielle au moins deux crochets d'engagement (17) élastiques découpés qui définissent préférablement à l'état non déformé une largeur externe supérieure à la largeur libre de l'orifice de montage et de dérivation (11).

3. Dispositif selon la revendication 1, **caractérisé en ce que** le crochet d'engagement respectif (17) comporte une rampe d'engagement antérieure (35).

4. Dispositif selon la revendication 1, **caractérisé en ce qu'**une sécurité de dévissage (D) à engagement de forme est de préférence pourvue au moins pour le tube de dérivation (5) dans le système de serrage (S).

5. Dispositif selon au moins une des revendications précédentes, **caractérisé en ce qu'**un dispositif de filtration et/ou de dosage (A) est intégré dans le tube de dérivation (5), préférablement une cuve de filtration et/ou de dosage (6) avec un couvercle amovible (7) et un élément de filtre grossier (23).

6. Dispositif selon la revendication 5, **caractérisé en ce que** le dispositif de dosage (A) peut être déplacé manuellement et depuis l'extérieur entre une position d'écoulement non restreint et une position de coupure, et comporte préférablement une jupe de dosage (24) pivotante pourvue d'un couvercle (7).

7. Dispositif selon la revendication 1, **caractérisé en ce que** le godet de collecte (12) est une coque en forme de croissant comportant deux moitiés de coque creuses (12a, 12b).

8. Dispositif selon la revendication 1, **caractérisé en ce que** chaque crochet d'engagement (17) est agencé sur une languette qui est limitée des deux côtés par des fentes longitudinales (27, 27a) à l'extrémité d'engagement du manchon (15).

9. Dispositif selon au moins une des revendications précédentes, **caractérisé en ce que** le corps de support (1) comporte une surface de pose (2) concave ou plane présentant essentiellement la même courbure externe que le tuyau de descente et sur lequel le côté opposé à la surface de pose (2) comporte un embout tubulaire (3) prolongeant un orifice de passage du corps de support (1) pour recevoir le manchon (15), et **en ce que**, sur la circonférence interne de l'embout tubulaire (3) et/ou de l'orifice de passage du corps de support (1), au moins une projection (26), préférablement une nervure longitudinale, agencée dans une position relative prédéterminée par rapport à la surface de pose, est pourvue dans une nervure longitudinale (27, 27a) et peut être amenée en engagement de sécurité contre la rotation.

10. Dispositif selon la revendication 1, **caractérisé en ce que** des éléments d'accouplement (21, 22) qui peuvent être amenés en engagement mutuel de sécurité contre la rotation par le système de serrage (S) sont pourvus sur le manchon (15) et sur le tube de dérivation (5).

11. Dispositif selon au moins une des revendications précédentes, **caractérisé en ce que** chaque crochet d'engagement (17) s'étend en direction circonférentielle sur environ 12 % de la circonférence du manchon (15), et présente préférablement un profil courbe.

12. Dispositif selon au moins une des revendications précédentes, **caractérisé en ce que** deux crochets d'engagement diamétralement opposés qui occupent en tout environ la moitié de la circonférence du manchon (15) sont pourvus sur le manchon (15).

13. Dispositif selon la revendication 7, **caractérisé en ce que** chaque moitié (12a, 12b) du godet de collecte en forme de croissant (12) est connectée au tube de dérivation (5) via une structure à rainure courbe (28a, 28b), et **en ce que** le tube de dérivation (5) est préférablement agencé en sections de tube (5a, 5b) qui s'emboîtent de façon télescopique, l'une comportant le godet de collecte (12) et l'autre la cuve de filtration et/ou de dosage (6).
